# EUROPEAN PATENT APPLICATION

(11) **EP 1 726 856 A2**
(43) Date of publication of application: **29.11.2006**
(21) Application number: 06252699.1
(22) Date of filing: 24.05.2006
(51) Int. Cl.: F16K 27/06, F16K 5/06

(54) **Control valve**

(30) Priority: 24.05.2005 GB 0510500; 09.08.2005 GB 0516325
(71) Applicant: The BSS Group PLC, Leicester, LE1 3QQ (GB)
(72) Inventor: Baker, Peter Robert, Bromsgrove Worcestershire (GB)
(74) Representative: Mosey, Stephen George

(57) **Abstract**

A flow control valve (10) comprises a valve housing with a flow passage therethrough, an adjustable ball with a flow passage therethrough being disposed in the flow passage downstream of a venturi constriction (29), with fine adjustment means (42:52) in said passage between the constriction and said ball. The constriction is provided by a cartridge (27:27a:27b) secured in the passage. The fine adjustment means are adjustable in a bore (35:35b) in the passage, the bore being defined either by said cartridge (27) providing the constriction, a further cartridge (27b), or by an integral part (51) of the valve body.

## Description

The present invention relates to a control valve intended principally for use in heating and chilled water systems.

WO 01/71289A discloses a control valve for both the measurement of flow through a conduit and the precise adjustment of the flow. In particular the valve incorporates a ball body for controlling flow through the valve, in which is a passage through the ball body is arranged an adjustable regulating member. Upstream of the ball body is a venturi and respective measuring gates are provided at the exterior of the valve body for measurement of pressures at the inlet section of the venturi, upstream of its constriction, and downstream of the constriction.

An object of the invention is to provide an improved control valve.

According to the present invention there is provided a control valve comprising a valve body having a passage for flow of fluid therethrough from an inlet to an outlet of the valve body, a ball with a flow passage therethough, the ball being disposed in the passage in the valve body for angular movement to control flow through the valve, means actuatable exteriorly of the valve body for angularly moving the ball, a constriction in the valve body downstream of the inlet and upstream of the ball, and fine adjustment means in said passage at a position between the constriction and the ball for control of the flow to the ball, the fine adjustment means being adjustable at the exterior of the valve body.

Separating the ball (valve) from the fine adjustment means is advantageous in allowing separate maintenance arrangements.

Preferably the fine adjustment means includes an elongated member, linearly displaceable in a bore, the elongated member constituting a regulating member. More preferably the regulating member is a shaft rotatably engaged in a valve housing of the valve body, for example integrally formed with the valve body. Desirably the shaft has a lower end arranged to engage with part of the bore to form a stop. Conveniently the regulating member is engageable at its upper end by an Allen Key to move it angularly. In one embodiment the regulating member is splined at its upper end to engage with a dial for indicating a degree of throttling by the fine adjustment means. In one embodiment the fine adjustment means is a needle valve.

In one embodiment the constriction is defined by a cartridge received in said passage. In a preferred embodiment the cartridge also defines a bore of said fine adjustment means in which a member of the fine adjustment means is adjustable to control flow to the ball. Advantageously the cartridge defines a venturi which provides said constriction. The cartridge may conveniently be a machined casting. Desirably the cartridge is secured in position in the passage in the valve body by respective retaining rings at opposite ends of the cartridge, or alternatively by a retaining ring at one end and the cartridge locating against a shoulder of the valve body at its other end. In an alternative embodiment the venturi and the fine adjustment means are provided by two separate components respectively.

Whilst the two component cartridge is easier to manufacture, this has the disadvantage of requiring many O-rings to seal. Moreover, in general, the more components, the greater the risk of leaking. Accordingly in a most preferred embodiment of the invention, a housing for said fine adjustment means within said passage is integral with the valve body.

By incorporating the fine adjustment housing into the valve body the manufacturing of the control valve is simplified and an added benefit is that there is a reduction in the number of possible leak paths.

Preferably an O-ring seal between the fine adjustment valve housing and a shaft of the fine adjustment means is prevented from movement upon axial adjustment movement of the shaft by a member fixed relative to the valve housing. Desirably said member is an externally screw-threaded sleeve ring engaged with a screw-thread in a bore in the valve housing in which the shaft is received for axial adjustment movement.

The invention also relates to a cartridge for fitting in a valve body of a flow control valve, the valve body having a flow passage therethrough from an inlet to an outlet and an angularly movable ball in the passageway with a flow passage therethough to control flow through the valve, the cartridge defining at least one of a constriction and a fine adjustment bore adapted to receive a fine adjustment flow control member.

The invention will now be described, by way of example, with reference to the accompanying drawings, in which:
Figure 1 is a plan view of a control valve of the invention,
Figure 2 is a longitudinal part cross-sectional side view through the valve of Figure 1,
Figure 3 is a longitudinal cross-sectional side view of a cartridge of the valve shown in Figures 1 and 2,
Figure 4 is an end view of the cartridge,
Figures 5 and 6 are respectively a cross-sectional view and an end view respectively of a retaining ring of the valve of the invention, and
Figure 7 is a part cross-sectional view of a housing containing adjustment read-out dials of the valve of the invention,
Figures 8 and 9 show respective separate components which when placed together form a cartridge equivalent to that shown in Figure 3, and
Figure 10 is longitudinal cross-sectional side view of a further embodiment of a control valve of the invention.

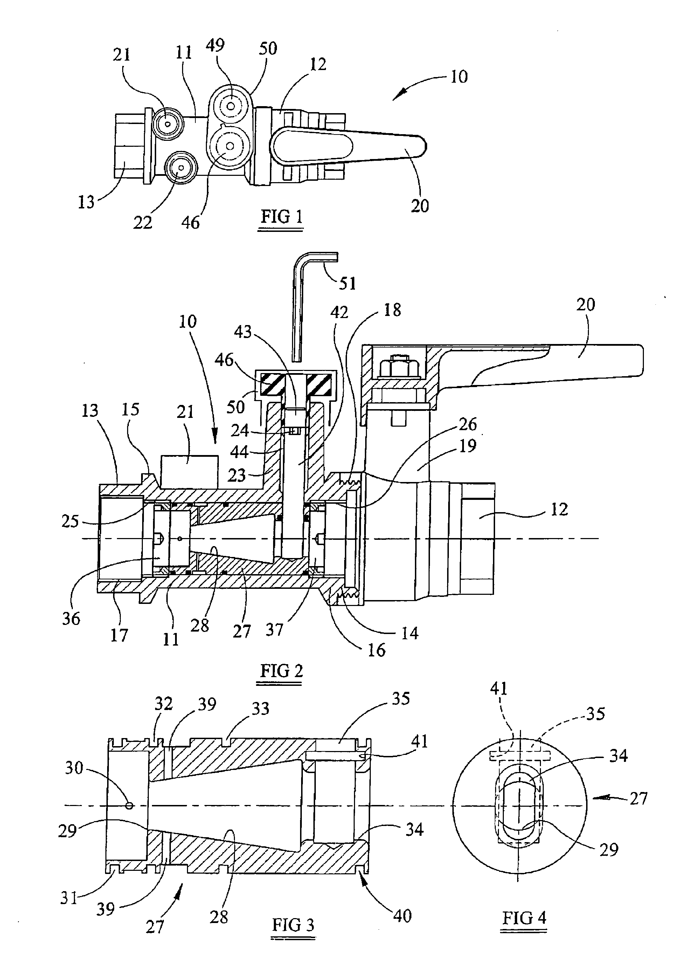

The control valve 10 shown in Figures 1 and 2 has a valve body formed of a first part 11 and a second part 12. Preferably each part would be of metallic material, for example bronze. The first part 11 is of generally elongated hollow cylindrical form having radially enlarged end portions 13, 14 respectively, the end portions having on their respective exterior surfaces respective annular flanges 15, 16, these flanges being respectively spaced slightly inwards from the open ends respectively of the end portions 13, 14, with respective internal and external screw threads 17, 18 being provided between the respective opens ends and the annular flanges. A passageway is defined through part 11. As shown best in Figure 2, the second part 12 which is also generally of hollow cylindrical form has its larger open end internally threaded so that it can be screw-threadedly engaged with the threads 18 at the radially enlarged end portion 14 so as to abut the flange 16 as shown and connect the first and second valve body parts together. Suitable sealing means could be provided at this junction if required. The open end at the portion 13 represents an inlet to the valve 10, whilst the open end of the second part 12 represents an outlet from the valve.

Substantially centrally of the second part 12 it is provided with an outwardly directed radial hollow cylindrical extension 19 and received rotationally in said extension is a shaft not shown which is connected at its lower end to a ball body (also not shown) which is received within the interior of the second part 12 in the normal manner to constitute a ball valve mechanism. A passageway extends through the ball body in the normal manner. The shaft extending from the ball body through the extension 19 is provided at its outer end with an operating handle 20, and by angularly moving the handle 20 and thus the shaft and the ball body attached to the shaft, the passage through the ball body can be placed into or out of alignment with the flow passage defined through the interior of the first part of the valve body 11 so as to allow or prevent flow through the valve from the inlet to the outlet thereof. The ball valve mechanism forms no part of the present invention and will thus not be described further.

Between the two flanges 15, 16 of the first valve body part 11, the external surface of said first valve body part 11 is generally cylindrical. However adjacent the flange 15 it is provided with a slightly axially offset, and angularly offset pair of inspection ports 21, 22 for measuring/monitoring the pressure at respective different positions within the valve body part 11 as will be described hereinafter. Moreover adjacent the flange 16, the valve body part 11 is formed with an adjustment member housing 23, this extending generally radially from the exterior surface of the valve body part 11, and like the ports 21, 22, being integral with the remainder of the first valve body part 11. The housing 23, as shown in Figure 2, is generally of hollow cylindrical form with a circlip 24 being provided at the inner surface thereof near the open top of the housing 23 for a purpose to be hereinafter explained.

The interior of the passageway defined inside the valve body part 11 is, over the axial length between the flanges 15 and 16 generally smooth. However at the respective opposite ends of this internal surface there are provided respective screw threads 25, 26, and moreover at the axial position of the adjustment member housing 23 the interior bore in the housing extends through the first valve body part 11 to break into the axial flow passageway.

Figures 3 and 4 show in detail a generally cylindrical cartridge 27 which is adapted to be received within the flow passageway in the first valve body part 11 as shown in Figure 2 to control flow from the control valve inlet to the ball valve and thence to the outlet of the control valve. Preferably the cartridge is machined from wrought DZR brass bar. However it could possibly be a machined investment casting.

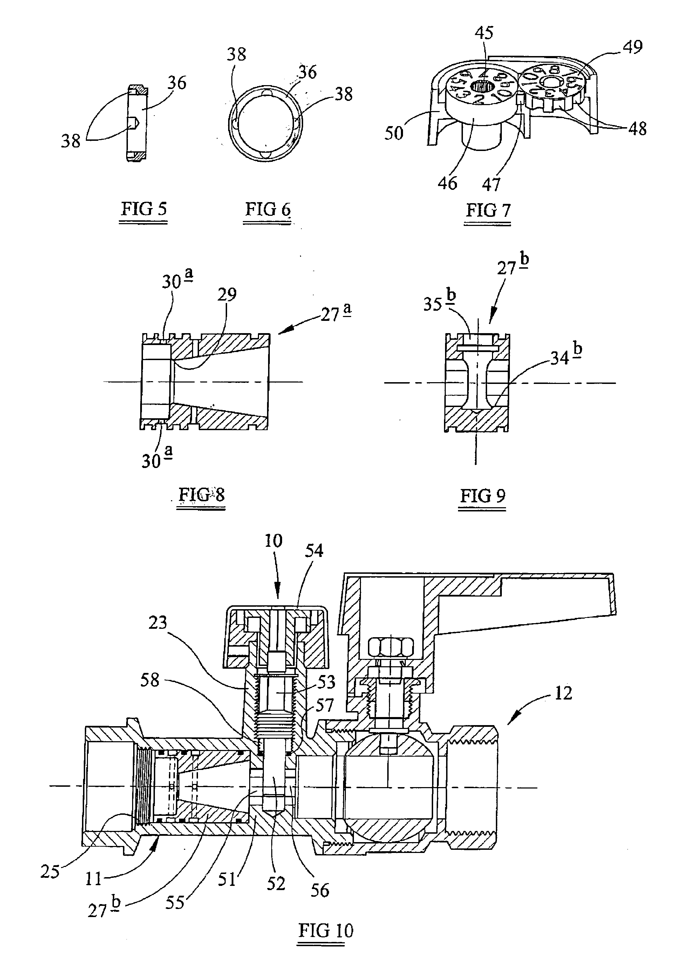

Internally the central part of the cartridge 27 defines a venturi opening 28, the opening defining a constriction 29 at its entry end. The end of the cartridge upstream of this constriction is of a much larger internal cylindrical diameter and one or more openings 30 extends from the inner surface of this part to mate with a passageway in the first body part 11 leading to the inspection port 21. At the outside of this end part of the cartridge upstream of the venturi opening 28 is an annular groove 31 for an O-ring seal. Further annular grooves 32, 33 respectively are provided for further corresponding O-ring seals for sealing the cartridge to the interior surface of the first body part 11. The end of the cartridge 27 at the downstream end of the venturi opening 28 is formed with an axial through opening 34 which, as can be seen from Figure 4, is of a shape having parallel longer opposite straight sides with opposite rounded ends. As can also be seen from Figure 4, the width of this opening substantially corresponds to the width of the circular constriction 29. Extending radially into the opening 34 through the exterior wall of the cartridge 27 is a circular-section bore 35, this being of the same size as the bore at the bottom of the adjustment member housing 23, it being intended that, in use, the bore at the lower end of the adjustment member housing 33 aligns with the radial bore 35 in the cartridge, when a cartridge is in its correctly inserted position axially in the first body part 11, as for example shown in Figure 2. The cartridge is fixed in this position by means of a pair of respective cylindrical retaining rings 36, 37 which are engaged with the respective screw threads 25, 26 in the interior of the first valve body part 11. Accordingly as shown in Figures 5 and 6, each ring has an external thread to mate with the threads 25, 26 and in its outwardly facing end each ring is provided with four equally-angularly spaced locations 38 to enable the ring to be screwed into and out of engagement with the first body part. As shown in Figure 2 when the two rings are screwed in they abut respective opposite ends of the cartridge 27 to hold in its correct axial position. It will be understood that the ring 37 will be screwed in prior to the second valve body part 12 being connected to the first valve body part 11. In an alternative embodiment the venturi could be formed in a component separate from the component providing the opening 34 and bore 35, as in Figures 8 and 9.

A pair of diametrically aligned radial openings 39, at 90° to opening(s) 30, are provided in the cartridge just downstream of the venturi to mate with a passageway in first body part 11 leading to inspection port 22.

Finally with regard to the fixing of the cartridge 27 in the first valve body part 11, it will be noted that the external surface at the end of the opening 34 is provided with an annular groove 40 for an O-ring seal, and moreover where the radial bore 35 breaks into the axial opening 34, there is a further groove 41. The O-ring seals in the grooves 31, 32, 33 and 40 provide a seal between the cartridge and the interior surface of the first valve body part 11, whilst the O-ring seal in the groove 41 forms a seal between the cartridge and a fine adjustment member 42 in the form of spindle or needle.

The member 42 is of generally cylindrical form and extends through the housing 23 and into the opening 34 via the radial bore 35 so that, as shown in Figure 2, in its lowermost position it closes the opening 34 through the cartridge 27 downstream of the venturi opening 28. The lower end of the member 42 is flat and acts on a flat lower part of the opening 34 to form a stop. At its opposite end, the member 42 is provided with splines 43. Immediately below the splines 43, the outer surface of the fine adjustment member 42 is plain, whilst at the lower end of this plain portion the member is stepped outwardly to provide a slightly larger diameter lower portion, and the portion of this immediately adjacent the step is externally threaded to mate with screw thread 44 at the lower part of the internal surface of the interior of the adjustment member housing 23 so that the member 42 can be screwed upwardly and downwardly to move linearly in this housing 23, the member thus acting as a fine adjustment to throttle flow through the valve The member 42 is thus shown in Figure 2 in its extreme, closed position when its flat lower surface is seated on the correspondingly flat portion of the opening 34. Its extreme open position would be when the shoulder or step at the top of the externally threaded part of the member 42 engages the circlip 24 and thus prevents upwards movement of the member 42. In this position the lower under surface of the member 42 would be substantially clear of the opening 34 which would thus be unrestricted or substantially so.

The splines 43 at the top of the member 42 engage with corresponding splines 45 in a central circular bore through a dial 46 carried on the top of the member 42 as shown best in Figure 2. This dial 46 has on its external surface a radial lug 47 which engages with a groove of a multiplicity of grooves 48 arranged radially around the outer cylindrical surface of a further dial 49, the dial 46 and further dial 49 being rotatably mounted in a plastics material housing 50 fitted at the upper end of the adjustment member housing 23 as shown in Figures 1 and 2. Finally it will be noted that the upper open end of the splined central opening in the dial 46 can receive an Allen Key 51 which engages the member 42 to move it angularly in order to alter its linear position up or down in the housing 23 and thus to alter the position of the lower end of the member 42 in the opening 34, thereby adjusting the throttling effect of the fine adjustment member.

It can be seen that the dials 46 and 49 are, in this example, each provided with the series of ten numerals, these corresponding to the lands at opposite sides of the grooves 48 for the further dial 49. It will be appreciated from Figure 7 that a full turn of the dial 46 corresponds only to one tenth of the full movement of the further dial 49, so that with the arrangement shown the two dials can indicate 100 positions of rotation of the member 42.

Accordingly it will be understood that with the control valve of the present invention, as compared to the prior art, the needle valve has been separated from the ball valve with the needle valve housing 23 being added to the cast body, and the first body part being internally threaded at its respective opposite ends to accept the retaining rings for holding the cartridge 27 in position. This cartridge is, in one embodiment, in the form of a combination venturi/needle valve furnished with O-rings and locked between the retaining rings after fine adjustment accurately to aline the needle valve bore in the cartridge with the needle valve housing. Typically the needle valve housing is threaded to allow the needle valve a maximum vertical movement of 12.5mm, the circlip constraining movement in an upwards direction and also providing for anti-blow out. In one example the needle valve is hard chrome-plated, and the splined end of the needle valve rises and falls vertically through the anchored mating dial 46 which rotates when the needle valve itself is rotated, thus indicating the degree of throttling between fully open and fully closed by means of the twin dial mechanism readout contained within the plastics material housing.

Accordingly it will be understood that the control valve effectively operates in the same way as a conventional ball valve with a fine adjustment mechanism, for example as in WO 01/71289A, but with a difference that the fine adjustment mechanism has been separated from the ball valve mechanism and the venturi being provided in a replaceable cartridge which also provides the internal bore which is throttled by the fine adjustment member.

Separating the ball valve from the needle valve will result in each element of isolation and control (ball valve for isolation and needle valve for control) being independent of each other with separate maintenance arrangements. The lever for the ball valve element is thus separate from the needle valve adjustment and counting mechanism. The On-Off control the flow by way of the ball valve is undertaken by a separate device to that required to adjust the flow characteristics through the needle valve, and finally the valve retention arrangement for venturi and needle valve housing by way of the retaining rings is considered far more secure than for known arrangements.

As mentioned, the single cartridge 27 can be replaced by two separate components, and Figures 8 and 9 respectively show these, namely a cartridge 27a, providing the venturi constriction 29a, and a cartridge 27b, providing the seat, opening 34b and bore 35b for the fine adjustment mechanism. The two components abut each other when positioned in the valve body part 11 effectively to act in the same manner as cartridges 27, i.e. as a single cartridge. However the two part construction is preferred for ease of manufacture. It will be noted that in Figure 8 the openings 30a around the cartridge interior are angularly displaced through 90° as compared to openings 30 of the one piece cartridge shown in Figure 3.

Instead of the one or two piece cartridge (hereinafter being referred to as a 'cartridge') being held in position by the two rings 36, 37, it would be possible to provide only a single ring, at one end of the 'cartridge', with the other end of the 'cartridge' locating against a machined shoulder of the valve body. In such a case, clearly only one of the screw threads 25, 26 is required.

A still further embodiment of a control valve of the invention is shown in Figure 10. Here, a single cartridge, incorporating only the venturi constriction, is used, the needle valve housing within the flow passage being formed as a part integral with the valve body. The control valve shown in Figure 10 is of very similar form to the control valve of both of the embodiments described hereinbefore, and parts thereof which are common to the still further embodiment will be denoted by the same numeral, whilst parts thereof not directly related to the still further embodiment will not be described in detail. The embodiment of Figure 10 is the preferred form of control valve of the invention.

Accordingly the control valve 10 of Figure 10 includes a valve body formed of a first part 11 and a second part 12 which are screw-threaded together. The second part, which contains a ball valve, is of substantially the same form as that of the embodiments previously described, and will thus not be further described. The first part 11 is similar to the first part of the control valve of said previously described embodiments, but differs principally in that the needle valve housing 23 projecting exteriorly of the flow passage through the valve is continued integrally into said passage to define a needle valve housing part in said flow passage, this part being denoted by the numeral 51. As can be seen, this housing extends across the whole of the flow passage through the valve body, but is provided with a circular-section central radial passage to receive a fine adjustment needle 52 which can be adjusted to move it up or down as shown in the drawing by means of an upper spindle 53 which extends to a rotatable dial, which with a further dial is mounted in a cover or cap 54 in a similar manner as with the previously described embodiments. At either side of the radial passage, the housing is formed with a central circular bore, these two aligned bores being denoted 55, 56 respectively. Accordingly when the fine adjustment needle is in the position shown in the drawing, i.e. fully screwed in, flow from bore 55 to bore 56 is prevented. In the position where the fine adjustment needle is fully screwed out of its housing within the flow passage, then full flow can occur from bore 55 to bore 56, with adjustment of flow being provided in positions between these extreme two states depending on the degree of screwing-in of the fine adjustment needle.

As will be seen from the drawing, the venturi construction is provided by means of a cartridge of a very similar form to that shown in Figure 8, with the inner end of the cartridge 27b abutting against an outwardly facing wall of the housing part 51, with a retaining ring (not shown) being engaged with screw thread 25 in the body to hold the cartridge in place. One further difference with the present invention relates to the sealing of the fine adjustment needle. It will be seen that this sealing is now provided at the bottom of the passage in the bore which extends through the exterior housing part of the fine adjustment valve. In other words this sealing is provided outside of the housing part 51 disposed within the flow passage. The sealing is in the form of an O-ring seal 57 at the bottom of the internally threaded bore in the exterior part of the housing for the needle valve. This O-ring seal 57 is tight around the fine adjustment needle 52 and is retained in place by a threaded ring-like component 58 which is threadedly held at the bottom of the bore in this exterior part of the needle valve housing. This ensures that the O-ring seal does not rise and fall with the movement of the spindle 53 and thus the needle 52.

By integrating the needle valve housing into the main valve body, a number of O-ring seals are eliminated, and as compared with the previously described embodiments, one threaded insert at the downstream side of the cartridge providing the needle valve body in the flow passage is also eliminated. Moreover by incorporating the needle valve body into the main valve body, the design is simplified from a manufacturing standpoint and also offers the benefit of a reduction in the number of leak paths. During the machining process, it is now possible to machine the stem hole and the needle valve port at the same time which assures alignment and reduced machining costs as compared to those incurred with the embodiments of the control valve shown in Figures 1 to 9.

## Claims

1. A control valve comprising a valve body having a passage for flow of fluid therethrough from an inlet to an outlet of the valve body, a ball with a flow passage therethough, the ball being disposed in the passage in the valve body for angular movement to control flow through the valve, means actuatable exteriorly of the valve body for angularly moving the ball, a constriction in the valve body downstream of the inlet and upstream of the ball, and fine adjustment means in said passage at a position between the constriction and the ball for control of the flow to the ball, the fine adjustment means being adjustable at the exterior of the valve body.

2. A control valve as claimed in Claim 1, wherein the fine adjustment means includes an elongated member linearly displaceable in a bore.

3. A control valve as claimed in Claim 2, wherein the elongated member constitutes a regulating member and is in the form of a shaft rotatably engaged in a valve housing of the valve body.

4. A control valve as claimed in Claim 3, wherein the valve housing with which the shaft is engaged is formed integrally with the valve body.

5. A control valve as claimed in Claim 3 or Claim 4, wherein the shaft has a lower end arranged to engage with part of the bore to form a stop.

6. A control valve as claimed in Claim 5, wherein said lower end is flat.

7. A control valve as claimed in any one of Claims 3 to 6, wherein the regulating member is engageable at its upper end by an Allen key to move it angularly.

8. A control valve as claimed in any one of Claims 3 to 7, wherein the regulating member is splined at its upper end to engage a dial for indicating a degree of throttling by the fine adjustment means.

9. A control valve as claimed in any one of Claims 1 to 8, wherein the fine adjustment means is a needle valve.

10. A control valve as claimed in any one of Claims 1 to 9, wherein the valve body incorporates an integral housing for said fine adjustment means within said passage.

11. A control valve as claimed in Claim 10 when appended to Claim 3, wherein an O-ring seal between the fine adjustment valve housing and said shaft of the fine adjustment means is prevented from movement upon axial adjustment movement of the shaft by a member fixed relative to the valve housing.

12. A control valve as claimed in Claim 11, wherein said member is an externally screw-threaded sleeve ring engaged with an screw-threaded in a bore in the valve housing in which the shaft is received for axial adjustment movement.

13. A control valve as claimed in any one of Claims 1 to 9 wherein the constriction is defined by a cartridge received in said passageway.

14. A control valve as claimed in Claim 13, wherein the cartridge defines a venturi which provides said construction.

15. A control valve as claimed in Claim 13 when appended to Claim 2, or in Claim 14, wherein the cartridge also defines a bore of said fine adjustment means in which said elongated member is adjustable to control flow to the ball.

16. A control valve as claimed in Claim 15, wherein the cartridge is secured in position in the passage in the valve body by respective retaining rings at opposite ends of the cartridge.

17. A control valve as claimed in Claim 16, wherein the retaining rings are screw-threadedly engaged with respective screw-threads of the valve body disposed at opposite ends of the cartridge.

18. A control valve as claimed in Claim 15, wherein the cartridge is secured in position in the passage in the valve body by a retaining ring at one end of the cartridge and by the cartridge locating against a shoulder of the valve body at its after end, or vice versa.

19. A control valve as claimed in Claim 18, wherein the retaining ring is screw-threadedly engaged with an internal screw thread of the valve body disposed at said one end of the cartridge.

20. A control valve as claimed in Claim 13 when appended to Claim 2, or in Claim 14, wherein a further cartridge defines a bore of said fine adjustment means in which said elongated member is adjustable to control flow to the ball.

21. A control valve as clamed in Claim 20, wherein an inner end of the cartridge defining the constriction abuts an inner end of the further cartridge, and respective retaining rings at the outer ends respectively of the two cartridges secure the cartridges in position in said passage in the valve body.

22. A control valve as claimed in Claim 20, wherein an inner end of the cartridge defining the constriction abuts an inner end of the further cartridge, the cartridges being secured in position in said passage in the valve body by a retaining ring at an outer end of said cartridge defining the constriction, and by the outer end of the further cartridge engaging against a shoulder of the valve body, or vice versa.

23. A control valve as claimed in Claim 13 or Claim 14, wherein the cartridge is a machined casting.

24. A control valve as claimed in Claim 20, wherein said further cartridge is a machined casting.

25. A cartridge for fitting in a valve body of a flow control valve, the valve body having a flow passage therethrough from an inlet to an outlet and an angularly movable ball in the passageway with a flow passage therethough constriction and a fine adjustment bore adapted to receive a fine adjustment flow control member.

26. A cartridge as claimed in Claim 25, wherein the cartridge defines both said constriction and said fine adjustment bore.
